## Europäisches Patentamt

## European Patent Office

## Office européen des brevets

(11) Veröffentlichungsnummer: **0 134 883**
A2

(12) # EUROPÄISCHE PATENTANMELDUNG

(21) Anmeldenummer: 84103806.0

(22) Anmeldetag: 06.04.84

(51) Int. Cl.⁴: **G 02 B 7/04**

(30) Priorität: **11.08.83 DE 3329003**

(43) Veröffentlichungstag der Anmeldung:
27.03.85 Patentblatt 85/13

(84) Benannte Vertragsstaaten:
AT BE CH DE FR GB IT LI LU NL SE

(71) Anmelder: MAP Mikrofilm Apparatebau Dr. Poehler
GmbH & Co. KG
Schulstrasse 2
D-6352 Ober-Mörlen(DE)

(72) Erfinder: Walczak, Andrzej, Dipl.-Ing.
Auf der Gickelsburg 8
D-6352 Ober-Mörlen(DE)

(74) Vertreter: Schlagwein, Udo, Dipl.-Ing.
Anwaltsbüro Ruppert & Schlagwein Bahnhofsallee 11
D-6350 Bad Nauheim(DE)

(54) Vorrichtung zum Fokussieren eines Objektivs.

(57) Bei einer Vorrichtung zum Fokussieren eines Objektivs (6), welches axial verschieblich in einer gleitend auf einer Filmbühne (3) abgestützten Objektivhülse (1) angeordnet ist, greift ein Stellrad (16) mit einem Radkranz (9) zwischen einem Bund (7) des Objektivs (6) und einer oberen Stirnfläche (8) der Objektivhülse (1). Der Radkranz nimmt in seiner Dicke über seinen halben Umfang gesehen, gleichförmig zu. Dadurch kommt es bei Verdrehung des Stellrades (16) zu einer Relativbewegung zwischen Objektiv (6) und Objektivhülse (1).

Das Stellrad (16) ist in axialer Richtung verformbar. Dies erlaubt es, trotz fester Lagerung des Stellrades (16) der Objektivhülse (1) in begrenztem Maße, sich axial zu bewegen und damit dem Verlauf der oberen Platte (2) der Filmbühne (3) zu folgen.

EP 0 134 883 A2

./...

Fig. 1

MAP Mikrofilm Apparatebau
Dr. Poehler GmbH & Co KG

08.08.1983

-1-

## Vorrichtung zum Fokussieren eines Objektivs

Die Erfindung bezieht sich auf eine Vorrichtung zum Fokussieren eines Objektivs, welches axial verschieblich in einer gleitend auf einer Filmbühne abgestützten Objektivhülse angeordnet ist. Solche Vorrichtungen sind zum Beispiel in Mikrofilm-Lesegeräten gebräuchlich und daher allgemein bekannt.

Durch die gleitende Abstützung der Objektivhülse auf der Filmbühne bleibt der Abstand zwischen Mikrofilm und Objektiv bei Verschiebung der Filmbühne konstant, sofern die Dicke der oberen durchsichtigen Platte der Filmbühne konstant ist und der Mikrofilm plan in der Filmbühne liegt. In der Praxis sind die Dickenschwankungen der oberen Platte über ihre Fläche gesehen derart, daß bei Verschiebung der Filmbühne häufig das Objektiv nachfokussiert werden muß. Ein solches Nachfokussieren ist auch erforderlich, wenn die Filmbühne nicht genau in einer rechtwinklig zum Objektiv verlaufenden Ebene ausgerichtet ist. In einem solchen Fall bewegt sich bei Verschiebung der Filmbühne die Objektivhülse mit dem Auge wahrnehmbar in vertikaler Richtung auf und ab. Die erforderliche Beweglichkeit der Objektivhülse in vertikaler Richtung bedingt es, daß zwischen dem Stellrad zum Fokussieren des Objektivs und dem Objektiv bewegliche Übertragungsmittel vorgesehen werden, die diese notwendigen Hübe der Objektivhülse in vertikaler Richtung zulassen.

...

Durch die Zwischenschaltung beweglicher Übertragungsglieder wird die bekannte Vorrichtung zum Fokussieren eines Objektivs relativ aufwendig. Das führt dazu, daß man bei Mikrofilm-Lesegeräten mit zwei Objektiven verschiedener Brennweite üblicherweise nur eine Fokussiereinrichtung vorsieht, durch die beide Objektive parallel zueinander stets gleichzeitig verstellt werden. Wechselt man von einem zum anderen Objektiv, dann ist zwangsläufig ein Nachfokussieren erforderlich.

Der Erfindung liegt die Aufgabe zugrunde, eine Vorrichtung der eingangs genannten Art zu entwickeln, welche mit möglichst geringem baulichen Aufwand eine axiale Bewegung der Objektivhülse zuläßt.

Diese Aufgabe wird erfindungsgemäß durch die im Anspruch 1 angegebenen Maßnahmen gelöst.

Der Hauptvorteil der erfindungsgemäßen Vorrichtung liegt in ihrem überaus einfachen Aufbau. Statt verformbare Zwischenglieder vorzusehen, ist der Erfinder auf den Gedanken gekommen, das Stellrad selbst in axialer Richtung verformbar auszubilden. Dadurch wird die Vorrichtung insgesamt sehr einfach und funktionell vorteilhaft. Durch das Fehlen von Zwischengliedern kann das Fokussieren sehr direkt und spielfrei erfolgen, so daß ein feinfühliges Verstellen möglich wird.

Das Stellrad ist besonders einfach ausgebildet, wenn es aus einem äußeren, in der Dicke entlang seines Umfangs veränderlichen Radkranz und einer diesen haltenden dünnwandigen Radscheibe gebildet ist.

Die erforderliche axiale Verformbarkeit des Stellrades kann dadurch erzeugt werden, daß die Radscheibe als elastische Membran ausgebildet ist.

Alternativ ist es auch möglich, in der Radscheibe eine oder mehrere bogenförmige Ausnehmungen oder eine spiralförmige Ausnehmung vorzusehen.

...

Vorteilhaft ist es auch, wenn das Stellrad mit einem radial nach außen gerichteten, umlaufenden Steg in eine Nut der Objektivhülse greift. Das Stellrad bewegt sich dann zwangsläufig mit der Objektivhülse nach unten, wenn diese sich mit der Oberfläche der Filmbühne nach unten bewegt. Ohne diesen Steg könnte es bei ungünstigen Bedingungen geschehen, daß sich die relativ schwere Objektivhülse nach unten bewegt und das Objektiv durch das Stellrad in seiner Stellung verbleibt. Das Stellrad würde also das Objektiv festhalten, so daß dadurch die Scharfeinstellung verloren ginge.

Wenn das Stellrad in Richtung der Filmbühne elastisch vorgespannt ist, dann wirkt es als Niederholer für die Objektivhülse. Es stellt sicher, daß die Objektivhülse stets in Anlage auf der Filmbühne verbleibt. Das Stellrad wirkt in einem solchen Fall ähnlich einer Tellerfeder.

Durch die im Anspruch 8 angegebene Maßnahme wird erreicht, daß bei Drehung des Stellrades bis zu 180 Grad das Objektiv gleichmäßig in einer Richtung verstellt wird.

Wenn nicht sichergestellt ist, daß die Filmbühne stets exakt in einer Ebene rechtwinklig zum Objektiv verfahrbar ist, dann muß die Objektivhülse der schräg zum Objektiv verfahrbaren Filmbühne mit dem Objektiv folgen können, damit die Scharfeinstellung nicht verloren geht. Um zu verhindern, daß durch das eintretende Verkanten des Stellrades dieses das Objektiv relativ zur Objektivhülse anhebt, ist es zweckmäßig, die Stirnflächen des Radkranzes ballig auszubilden.

Die Erfindung läßt zahlreiche Ausführungsmöglichkeiten zu. Zur Verdeutlichung ihres Grundprinzips ist eine davon schematisch in der Zeichnung dargestellt und wird nachfolgend beschrieben. Es zeigen

...

Figur 1 - eine schematische Schnittdarstellung durch
einen die Erfindung betreffenden Bereich
eines Mikrofilm-Lesegerätes mit der erfindungsgemäßen Vorrichtung zum Fokussieren;

Figur 2 - eine Draufsicht auf ein Stellrad der erfindungsgemäßen Vorrichtung;

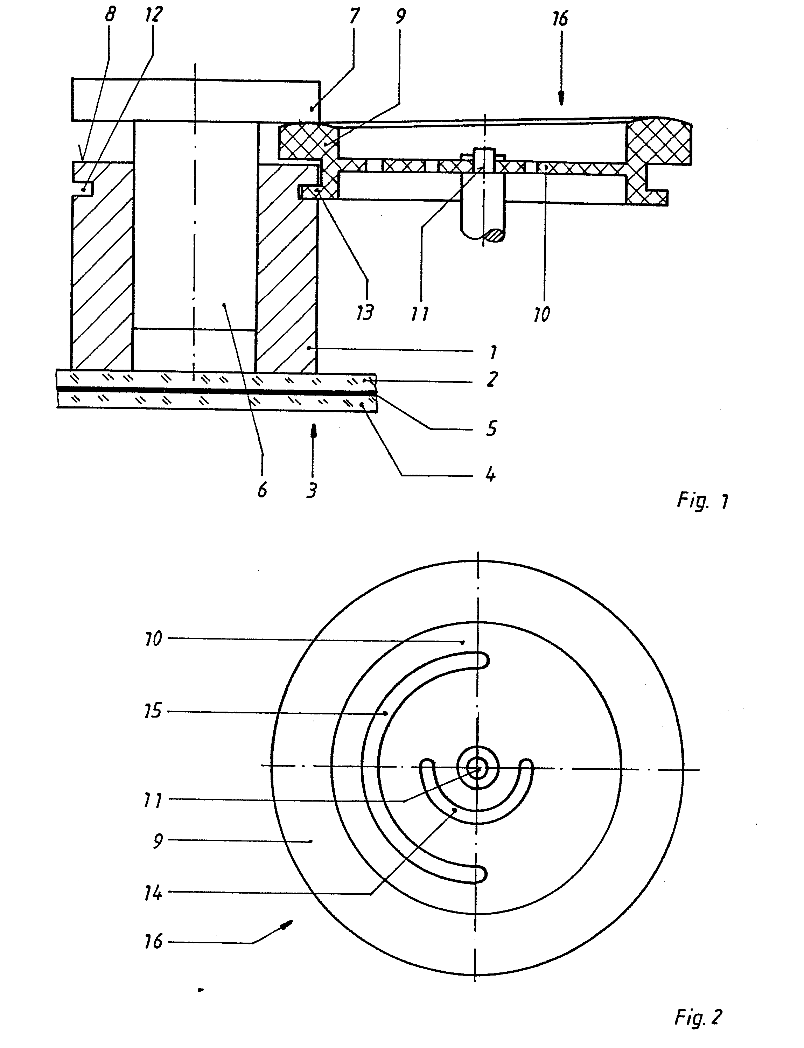

Die Figur 1 zeigt eine Objektivhülse 1, welche gleitend auf
einer oberen transparenten Platte 2      einer Filmbühne 3
steht. Die Filmbühne 3 besitzt des weiteren eine untere, transparente Platte 4, so daß zwischen den Platten 2, 3 ein Mikrofiche 5 gelegt werden kann.

In der Objektivhülse 1 ist axial verschieblich ein Objektiv
6 geführt, durch das Filmbilder des Mikrofiches 5 vergrößert auf
die nicht dargestellte Mattscheibe des Mikrofilm-Lesegerätes
projiziert werden können.

Dieses Objektiv 6 greift mit einem Bund 7 über die obere Stirnfläche 8 der Objektivhülse 1. In den Zwischenraum zwischen dem
Bund 7 und der Stirnfläche 8 greift ein Stellrad 16 mit einem
Radkranz 9. Dieses Stellrad 16 besteht aus einer relativ dünnwandigen Radscheibe 10 und dem Radkranz 9. Der Radkranz 9 ist
über den Stellradumfang gesehen nicht gleichförmig dick, vielmehr nimmt seine Dicke über 180 Grad gleichmäßig zu. Das Stellrad 16 ist mittig mittels einer Achse 11 am nicht dargestellten
Objektivträger des Mikrofilm-Lesegerätes drehbar gelagert.
Dreht man an dem Stellrad 16, so gelangt, je nach Drehsinn,
ein Bereich geringerer oder größerer Dicke des Radkranzes 9
in den Zwischenraum zwischen dem Bund 7 und der Stirnfläche 8
und bewegt das Objektiv 6 relativ zur Objektivhülse 1.

Die Figur 1 zeigt weiterhin, daß die Objektivhülse 1 nahe ihres Stellrades 16 eine umlaufende Nut 12 hat, in die ein nach außen gerichteter, umlaufender Steg 13 des Stellrades 16 greift. Dadurch biegt die relativ schwere Objektivhülse 1 zwangsläufig das Stellrad 16 nach unten, sofern sich die Objektivhülse 1, beispielsweise infolge eines Schrägverlaufs der Filmbühnenführung, nach unten bewegt. Ohne den Steg in Verbindung mit der Nut 12 könnte es geschehen, daß das Stellrad 16 bei einer Abwärtsbewegung der Objektivhülse 1 das Objektiv 6 zurückhält, so daß es zu einer Relativbewegung zwischen Objektiv und Objektivhülse kommt.

Die axiale Verformbarkeit des Stellrades 16, welche notwendig ist, um eine axiale Bewegung der Objektivhülse 1 zu ermöglichen, kommt dadurch zustande, daß die Radscheibe 10 relativ dünnwandig ist und daß, wie Figur 2 zeigt, in der Radscheibe 10 zwei bogenförmige Ausnehmungen 14, 15 oder Schlitze vorgesehen sind. Bei der gezeigten Ausführungsform sind die Ausnehmungen 14, 15 halbkreisförmig und haben unterschiedliche Durchmesser. Statt der zwei Ausnehmungen 14, 15 kann auch eine einzige spiralige Ausnehmung vorgesehen sein. Denkbar wäre es auch, den Radkranz durch Speichen mit einem Nabenbereich des Stellrades 16 zu verbinden. Bei der Ausführungsform gemäß Figur 1 sind die Stirnflächen des Radkranzes 9 ballig ausgeführt. Dadurch wird bei einem Verbiegen des Stellrades 16 durch Absenken oder Ansteigen der Objektivhülse 1 das Objektiv 6 nicht relativ zur Objektivhülse 1 verschoben. Eine einmal vorgenommene Scharfeinstellung bleibt deshalb auch dann erhalten, wenn sich die Objektivhülse 1 infolge einer Schieflage der Filmbühne 3 auf der Filmbühne 3 abwärts oder aufwärts bewegt.

Für Objektive mit ausreichend großer Schärfentiefe kann man jedoch auf diese Balligkeit verzichten und die Stirnflächen flach ausbilden.

...

Möglich ist auch eine Ausführungsform, bei der das Stellrad 16 auf seiner Achse 11 axial verschieblich ist. Dann genügt eine relativ geringe axiale Verformbarkeit des Stellrades 16, durch die vor allem ein Verkanten des Stellrades 16 auf der Achse 11 verhindert wird.

MAP Mikrofilm Apparatebau
Dr. Poehler GmbH & Co KG                    08.08.1983

-1-

Ansprüche

1. Vorrichtung zum Fokussieren eines Objektivs, welches axial verschieblich in einer gleitend auf einer Filmbühne abgestützten Objektivhülse angeordnet ist, g e k e n n - z e i c h n e t  d u r c h   folgende Maßnahmen:

   a) Ein um eine parallel zum Objektiv (6) ausgerichtete Achse drehbares Stellrad (16) greift außenseitig mit einem Teilbereich seiner Stirnflächen zwischen die Objektivhülse (1) und einen Bund (7) des Objektivs (6).

   b) Die Dicke des Stellrades (16) ist entlang seines Umfangs unterschiedlich.

   c) Das Stellrad (16) ist in axialer Richtung verformbar.

2. Vorrichtung nach Anspruch 1, d a d u r c h  g e k e n n - z e i c h n e t , daß das Stellrad (16) aus einem äußeren, in der Dicke entlang seines Umfangs veränderlichen Radkranz (9) und einer diesen haltenden dünnwandigen Radscheibe (10) gebildet ist.

3. Vorrichtung nach Anspruch 1 oder einem der folgenden, d a - d u r c h  g e k e n n z e i c h n e t , daß die Radscheibe (10) als elastische Membran ausgebildet ist.

...

4. Vorrichtung nach Anspruch 1 oder einem der folgenden, d a d u r c h   g e k e n n z e i c h n e t , daß in der Radscheibe (10) zur Erzeugung einer axialen Verformbarkeit eine oder mehrere bogenförmige Ausnehmungen (14, 15) vorgesehen sind.

5. Vorrichtung nach Anspruch 1 oder einem der folgenden, d a d u r c h   g e k e n n z e i c h n e t , daß in der Radscheibe (10) eine spiralförmige Ausnehmung vorgesehen ist.

6. Vorrichtung nach Anspruch 1 oder einem der folgenden, d a d u r c h   g e k e n n z e i c h n e t , daß das Stellrad (16) mit einem radial nach außen gerichteten, umlaufenden Steg (13) in eine Nut (12) der Objektivhülse (1) greift.

7. Vorrichtung nach Anspruch 1 oder einem der folgenden, d a d u r c h   g e k e n n z e i c h n e t , daß das Stellrad (16) in Richtung der Filmbühne (3) elastisch vorgespannt ist.

8. Vorrichtung nach Anspruch 1 oder einem der folgenden, d a d u r c h   g e k e n n z e i c h n e t , daß die Dicke des Radkranzes (9) über seinen halben Umfang gleichmäßig zunimmt und dann wieder gleichmäßig bis zum Anfangspunkt abnimmt.

9. Vorrichtung nach Anspruch 1 oder einem der folgenden, d a d u r c h   g e k e n n z e i c h n e t , daß die Stirnflächen des Radkranzes (9) ballig sind.

1/1

0134883

Fig. 1

Fig. 2